# EUROPEAN PATENT APPLICATION

(11) **EP 4 439 755 A2**
(43) Date of publication of application: **02.10.2024**
(21) Application number: 24166056.2
(22) Date of filing: 25.03.2024
(51) Int. Cl.: H01M 10/04, H01M 10/42, H01M 10/48, H01M 50/103, H01M 50/105, H01M 50/107, H01M 50/116, H01M 50/121, H01M 50/124, H01M 50/131, G01B 11/16

(54) **BATTERY CELL AND METHOD OF MANUFACTURING THE BATTERY CELL**

(30) Priority: 27.03.2023 KR 20230039741; 20.07.2023 KR 20230094664
(71) Applicant: Samsung SDI Co., Ltd., Yongin-si, Gyeonggi-do 17084 (KR)
(72) Inventor: PARK, Sanghun, 17084 Yongin-si (KR)
(74) Representative: Marks & Clerk LLP

(57) **Abstract**

A battery cell and a method of manufacturing the battery cell are provided, in which a swelling degree of the battery cell may be precisely measured. A battery cell includes a grid on a surface portion of the battery cell. A method of manufacturing a battery cell includes printing a grid on a surface portion of a battery cell, tubing the surface portion on which the grid is printed to mount the surface portion on an outer surface of the battery cell, and measuring a swelling degree of the battery cell with respect to a grid lattice shape of the surface portion after tubing, as a reference shape.

## Description

### BACKGROUND

### 1. Field

Aspects of one or more embodiments relate to a battery cell and a method of manufacturing the battery cell.

### 2. Description of the Related Art

As cylindrical secondary batteries are repeatedly charged and discharged, a part of the wall of the cylinder swells. This phenomenon is referred to as swelling.

Such swelling of the secondary battery occurs not in the entire wall of the cylinder, but in a partial area thereof, and, thus, it is desirable to accurately identify a mounting position, a cause of mounting, and a swelling degree of a battery cell to secure the reliability of the battery cell.

With regard to swelling of a general secondary battery, it is a common measurement method to measure a swelling degree of the secondary battery by manually measuring, by using a vernier caliper or a micrometer, a thickness increase corresponding to a charge/discharge result obtained at a development stage. This method has a limitation in repeatedly identifying an accurate swelling state of the secondary battery due to degradation of precision caused by repeated use of measuring points and measuring gauges by operators.

### SUMMARY

According to an aspect of one or more embodiments, a battery cell and a method of manufacturing the battery cell are provided, in which a swelling degree of the battery cell may be precisely measured.

However, the above-described aspects and problems are provided as examples, and the aspects and problems to be solved by embodiments of the present disclosure are not limited thereto.

Additional aspects will be set forth, in part, in the description which follows and, in part, will be apparent from the description, or may be learned by practice of the presented embodiments of the disclosure.

According to one or more embodiments, a battery cell includes a grid on a surface portion of the battery cell.

In the battery cell according to one or more embodiments of the disclosure, a ratio of a line length to an inter-line spacing length in the grid may be an integer ratio.

In the battery cell according to one or more embodiments of the disclosure, an inter-line intersecting portion of the grid may be formed as a space portion.

In the battery cell according to one or more embodiments of the disclosure, a lattice spacing of the grid may be adjustable.

In the battery cell according to one or more embodiments of the disclosure, the grid may include thermochromic ink.

In the battery cell according to one or more embodiments of the disclosure, the grid may be printed as a hologram.

In the battery cell according to one or more embodiments of the disclosure, the battery cell may have a cylindrical shape.

In the battery cell according to one or more embodiments of the disclosure, the battery cell may have a prismatic shape.

In the battery cell according to one or more embodiments of the disclosure, the battery cell may be a pouch-type battery cell.

According to one or more embodiments of the present disclosure, a method of manufacturing a battery cell includes printing a grid on a surface portion of a battery cell, tubing the surface portion on which the grid is printed to mount the surface portion on an outer surface of the battery cell, and measuring a swelling degree of the battery cell with respect to a grid lattice shape of the surface portion after tubing, as a reference shape.

In one or more embodiments, the battery cell may have a cylindrical shape.

According to one or more embodiments of the present disclosure, a method of manufacturing a battery cell includes tubing a battery cell to mount a surface portion thereof on an outer surface of the battery cell, curved-printing a grid on the surface portion mounted on the battery cell, and measuring a swelling degree of the battery cell with respect to a lattice shape of the curved-printed grid, as a reference shape.

In one or more embodiments, the battery cell may have a cylindrical shape.

At least some of the above and other features of the invention are set out in the claims.

Other aspects, features, and advantages in addition to those described above will become apparent from the detailed description, claims, and drawings for carrying out the disclosure provided herein.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a perspective view showing a battery cell including a grid formed on a surface portion, according to one or more embodiments of the disclosure;
FIG. 2 shows deformation of a grid if a swelling phenomenon occurs in a battery cell, according to one or more embodiments of the disclosure;
FIGS. 3A to 3C are enlarged views of a region "A" of FIG. 1, where FIG. 3A corresponds to a case in which a ratio of a grid line length to an inter-line spacing length is 1:1, FIG. 3B corresponds to a case in which a ratio of a grid line length to an inter-line spacing length is 2:1, and FIG. 3C corresponds to a case in which a ratio of a grid line length to an inter-line spacing length is 3:1;
FIG. 4 is an enlarged view of a region "B" of FIG. 1;
FIG. 5 is a perspective view showing a grid lattice spacing being narrower than in FIG. 1, according to one or more embodiments of the disclosure;
FIG. 6 is a perspective view showing a battery cell including a grid formed of thermochromic ink according to one or more embodiments of the disclosure;
FIG. 7 is a perspective view showing a battery cell including a grid formed of a hologram, according to one or more embodiments of the disclosure;
FIG. 8 is a perspective view showing a prismatic battery cell including a grid formed therein, according to one or more embodiments of the disclosure;
FIG. 9 is a perspective view showing a pouch-type battery cell including a grid formed therein, according to one or more embodiments of the disclosure;
FIG. 10 is a flowchart showing a method of manufacturing a battery cell, according to one or more embodiments of the disclosure; and
FIG. 11 is a flowchart showing a method of manufacturing a battery cell, according to one or more embodiments of the disclosure.

### DETAILED DESCRIPTION

Reference will now be made in further detail to some embodiments, examples of which are illustrated in the accompanying drawings, wherein like reference numerals refer to like components throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items.

The disclosure may have various modifications thereto and various embodiments, and, thus, some example embodiments will be illustrated in the drawings and described in further detail in the below detailed description. It is to be understood, however, that this is not intended to limit the disclosure to a particular embodiment, and should be understood to include all changes, equivalents, and alternatives falling within the scope of the disclosure. To describe the disclosure, the same component, even when shown in different embodiments, will be denoted by the same reference numeral.

Herein, some embodiments will be described in further detail with reference to the accompanying drawings, and in the description with reference to the drawings, the same or corresponding components are given the same reference numerals, and redundant description thereto may be omitted.

In the following embodiments, the terms "first," "second," etc., may be used to distinguish one component from other components, rather than limiting.

In the following embodiments, singular forms include plural forms unless indicated otherwise contextually.

In the following embodiments, the terms "comprise," "include," "have," or the like, are intended to mean that there are features, or components, described herein, but do not preclude the possibility of adding one or more other features or components.

In the drawings, the size of components may be exaggerated or reduced for convenience of description. For example, the size and thickness of each component shown in the drawings may be shown for convenience of description, but the disclosure is not necessarily limited to the illustration.

In the following embodiments, an x-axis, a y-axis, and a z-axis are not limited to three axes on an orthogonal coordinate system, and may be interpreted in a broad sense. For example, the x-axis, the y-axis, and the z-axis may be orthogonal to each other, but may also refer to different directions that are not orthogonal to each other.

If certain embodiments may be implemented otherwise, a particular process order may be performed differently from the order described. For example, two processes described in succession may be performed substantially concurrently or simultaneously, or may be performed in a reverse order to the order described.

The terms used herein are used to describe particular embodiments, and are not intended to limit the disclosure. Moreover, it should be understood that the terms "comprise," "include," "have," or the like used herein are to indicate the presence of features, numbers, steps, operations, elements, parts, or a combination thereof described in the specifications, and do not preclude the presence or addition of one or more other features, numbers, steps, operations, elements, parts, or a combination thereof.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

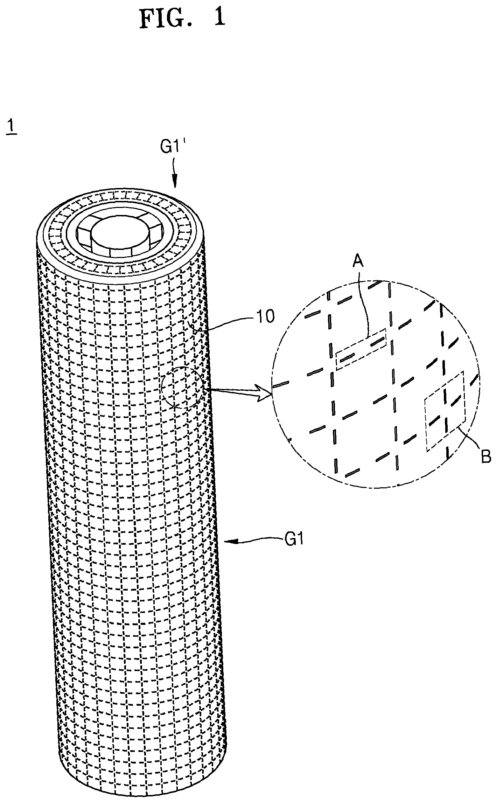

Herein, a battery cell according to one or more embodiments of the disclosure will be described with reference to FIGS. 1 to 4.

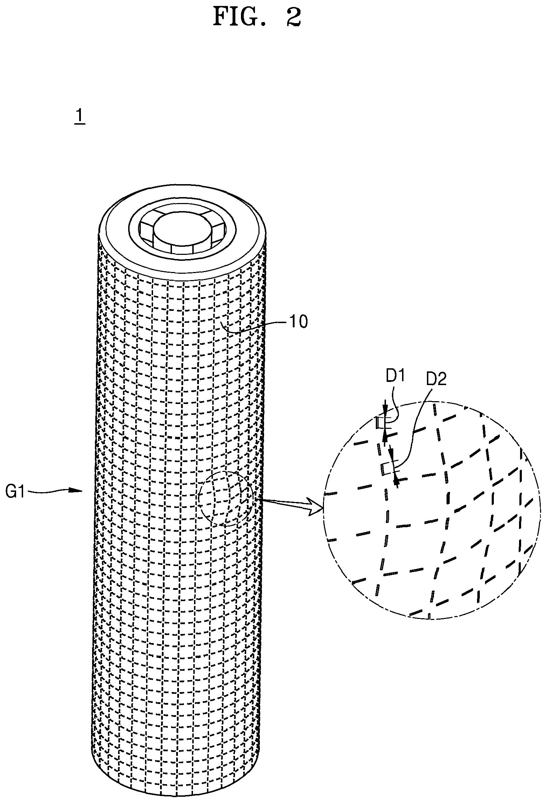

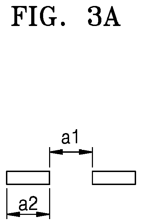

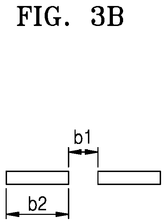

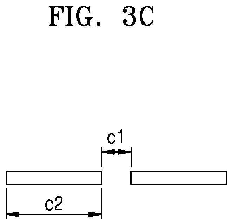

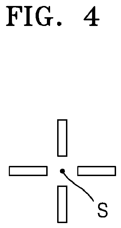

FIG. 1 is a perspective view showing a battery cell including a grid formed on a surface portion, according to one or more embodiments of the disclosure. FIG. 2 shows deformation of a grid if a swelling phenomenon occurs in a battery cell, according to one or more embodiments of the disclosure. FIGS. 3A to 3C are enlarged views of a region "A" of FIG. 1, where FIG. 3A corresponds to a case in which a ratio of a grid line length to an inter-line spacing length is 1:1, FIG. 3B corresponds to a case in which a ratio of a grid line length to an inter-line spacing length is 2:1, and FIG. 3C corresponds to a case in which a ratio of a grid line length to an inter-line spacing length is 3:1. FIG. 4 is an enlarged view of a region "B" of FIG. 1.

Referring to FIGS. 1 to 4, a battery cell 1 according to one or more embodiments of the disclosure includes a grid G1 formed on a surface portion 10 of the battery cell 1.

According to one or more embodiments, the grid G1 formed on the surface portion (e.g., a side surface portion) 10 of the battery cell 1 may refer to a structure in which a linear lattice shape is printed on an outer surface of a cylindrical secondary battery. As such, the grid G1 formed on the surface portion 10 of the battery cell 1 may be a swelling parameter. If swelling of a cylindrical battery cell occurs, a swelling degree of the cylindrical battery cell may be visually identified from deformation of the grid G1.

According to one or more embodiments, a grid G1' may also be formed on a top surface portion of the cylindrical battery cell 1. The grid G1 formed on the side surface portion of the cylindrical battery cell 1 may measure a swelling degree of the side surface portion of the cylindrical battery cell 1, and the grid G1' formed on the top surface portion of the cylindrical battery cell 1 may measure a swelling degree of the top surface portion of the cylindrical battery cell 1. As such, the swelling degree of the cylindrical battery cell 1 may be easily visually measured according to a deformation degree of a grid.

For example, as shown in FIG. 2, a length D1 of a line of a portion where no swelling occurs may be less than a length D2 of a line of a portion where swelling occurs.

The grids G1 and G1' may be formed in a shape in which dotted lines intersect each other in a lattice shape. Upon occurrence of swelling, if a length of each dotted line is greater than a basic length, swelling may be regarded as being to occur. A region of dotted lines having increasing lengths among intersecting dotted lines, a region where swelling occurs based on an increasing length of each dotted line, and a swelling degree may be precisely identified.

Referring to FIGS. 3A to 3C, a print spacing between dotted lines of the grids G1 and G1' according to one or more embodiments may be formed at an integer ratio to a length of a dotted line. Ratios of line lengths a2, b2, and c2 of the grids G1 and G1' to inter-line spacing lengths a1, b1, and c1 may be integer ratios such as 1 to 1, 2 to 1, and 3 to 1, respectively. As such, by maintaining an integer ratio as a ratio of a grid line length to an inter-line spacing length, a change degree of a line length and an inter-line spacing length and a change degree of an inter-line spacing length with respect to a line length may be easily identified in case of occurrence of swelling, thereby more easily measuring a swelling degree.

According to one or more embodiments, line lengths of the grids G1 and G1' may be equal to each other. Inter-line spacing lengths thereof may also be equal to each other. Thus, if swelling occurs in a specific portion of a surface portion of a cylindrical secondary battery, a change amount of a line length and an inter-line spacing length of the corresponding portion may be compared with a line length and an inter-line spacing length of a portion where no swelling occurs.

Referring to FIG. 4, an intersecting portion between dotted lines may be formed as a space portion S. If lines extend from the intersecting portion to form a cross shape, cross interference between intersecting lines occurs in case of occurrence of swelling, making it difficult to precisely measure a deformation degree of the lines. As in one or more embodiments, the intersecting portion between the dotted lines may form the empty space portion S, thereby preventing or substantially preventing the precision of swelling measurement from being degraded due to interference between the dotted lines in case of occurrence of swelling.

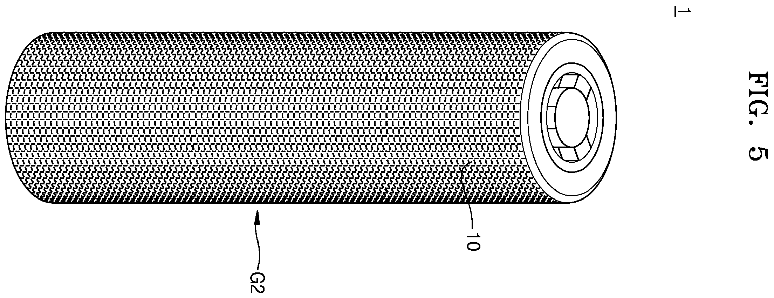

FIG. 5 is a perspective view showing a grid lattice spacing being narrower than in FIG. 1, according to one or more embodiments of the disclosure. Features and components not shown in FIG. 5 may be the same or similar to corresponding features and components shown in FIGS. 1 to 4.

Referring to FIG. 5, a lattice spacing of a grid G2 may be adjustable. As shown in FIG. 1, a grid may be formed such that a spacing between dotted lines of lattices of the grid is visible to the naked eye, or, as shown in FIG. 5, the grid may be formed densely such that a spacing between the lattices of the grid is difficult to identify with the naked eye.

For example, a spacing between lattices needs to a have a resolution to estimate volume expansion corresponding to swelling of a battery cell, and, thus, to check a swelling degree of the battery cell in a local portion according to technological advances, it should be possible to measure a swelling degree in a microscopic unit, such that, as a spacing between dotted lines of a lattice decreases, it may become easy to identify the swelling degree of the battery cell in the local portion.

As such, for a shape of lattices that are too dense to distinguish with the naked eye, a deformation degree of a grid may be identified using test equipment including a light-receiving element and a charge coupled device (CCD) pixel.

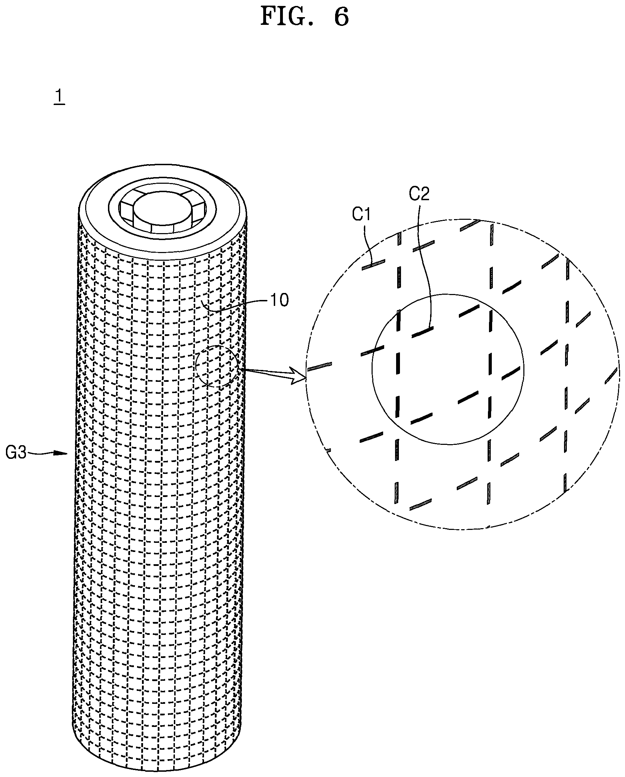

FIG. 6 is a perspective view showing a battery cell including a grid formed of thermochromic ink according to one or more embodiments of the disclosure. Features and components not shown in FIG. 6 may be the same or similar to corresponding features and components shown in FIGS. 1 to 4.

Referring to FIG. 6, a grid G3 may be formed of thermochromic ink. The thermochromic ink may be applied onto the surface portion 10 of the battery cell 1 in a grid shape. The thermochromic ink may be applied onto the surface portion 10 of the battery cell 1 to measure a deformation degree of the surface portion 10 of the battery cell 1 in case of occurrence of swelling of the battery cell 1 and to sense a temperature change of the surface portion 10 of the battery cell 1, such that a color of a grid portion coated with the thermochromic ink may change with a degree of temperature change. For example, a color of a line C1 may be different from a color of another line C2, referring to FIG. 6. If a temperature change of the battery cell 1 occurs locally, a color may change in a corresponding temperature-changing portion. As such, through a grid structure formed of thermochromic ink, the swelling degree of the battery cell 1 may be measured and, at the same time, the temperature change of the battery cell 1 may be sensed.

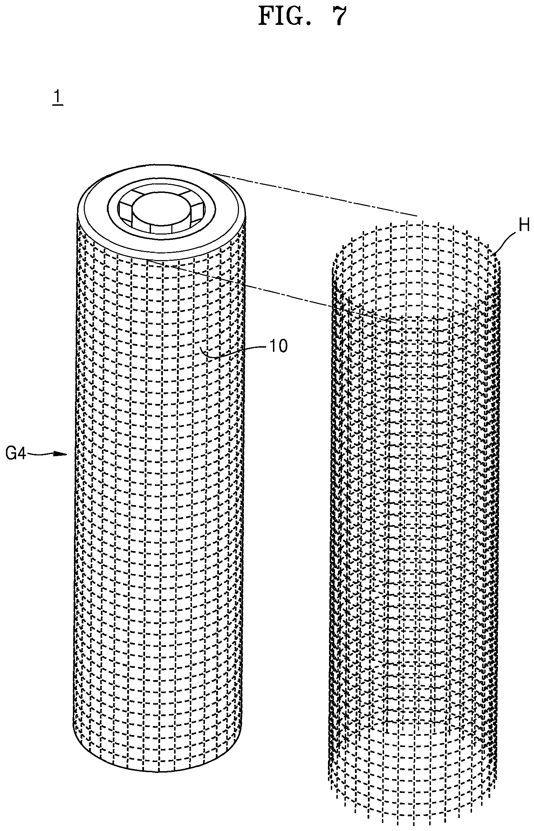

FIG. 7 is a perspective view showing a battery cell including a grid formed of hologram(H), according to one or more embodiments of the disclosure. Features and components not shown in FIG. 7 may be the same or similar to corresponding features and components shown in FIGS. 1 to 4.

Referring to FIG. 7, a grid G4 according to one or more embodiments of the disclosure may be printed as a hologram. If swelling of the battery cell 1 occurs, the swelling degree of the battery cell 1 may be determined from the hologram. Through the hologram, a swelling portion and a swelling degree of the battery cell 1 may be rapidly identified three-dimensionally.

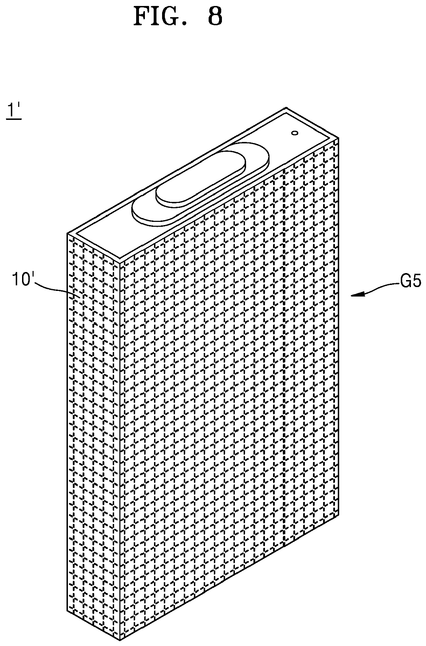

FIG. 8 is a perspective view showing a prismatic battery cell including a grid formed therein, according to one or more embodiments of the disclosure.

Referring to FIG. 8, a grid G5 according to one or more embodiments of the disclosure may be formed on a surface portion 10' of a prismatic battery cell 1'. Thus, the grid G5 may be formed on the surface portion 10' of the prismatic battery cell 1' as well as a cylinder-type battery cell. If swelling of the battery cell 1' occurs, the grid G5 formed on the surface portion 10' of the prismatic battery cell 1' may identify a swelling position and a swelling degree of the prismatic battery cell 1' from a position and a degree of deformation of the grid G5 occurring as the surface portion 10' of the battery cell 1' is swollen.

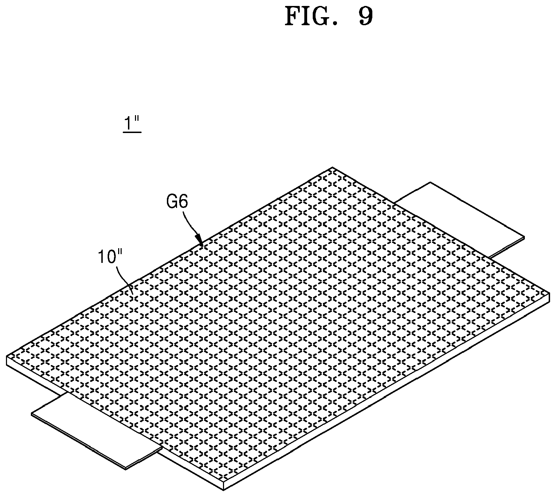

FIG. 9 is a perspective view showing a pouch-type battery cell including a grid formed therein, according to one or more embodiments of the disclosure.

Referring to FIG. 9, a grid G6 according to one or more embodiments of the disclosure may be formed on a surface portion 10" of a pouch-type battery cell 1". Thus, the grid G6 may be formed on the surface portion 10" of the pouch-type battery cell 1" as well as the cylinder-type battery cell. If swelling of the battery cell 1" occurs, the grid G6 formed on the surface portion 10" of the pouch-type battery cell 1" may identify a swelling position and a swelling degree of the pouch-type battery cell 1" from a position and a degree of deformation of the grid G6 occurring as the surface portion 10" of the battery cell 1" is swollen.

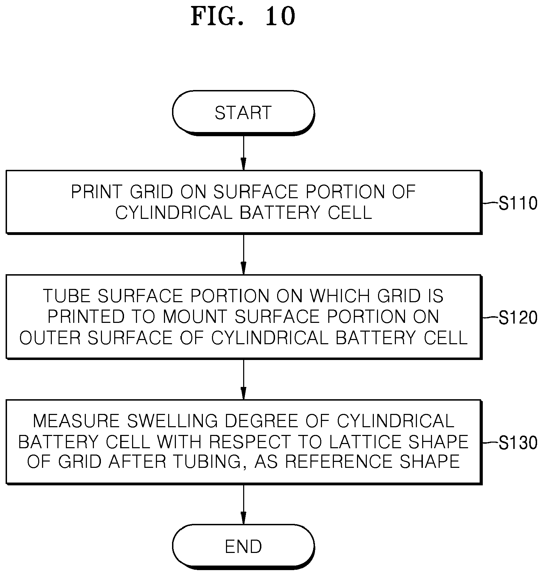

FIG. 10 is a flowchart showing a method of manufacturing a battery cell, according to one or more embodiments of the disclosure. Features and components not shown in FIG. 10 may be the same or similar to corresponding features and components shown in FIGS. 1 to 4.

Referring to FIG. 10, a method of manufacturing a battery cell according to one or more embodiments of the disclosure may include an operation S110 of printing the grid G1 on the surface portion 10 of the cylindrical battery cell 1, an operation S120 of tubing the surface portion 10 on which the grid G1 is printed to mount the surface portion 10 on an outer surface of the cylindrical battery cell 1, and an operation S130 of measuring a swelling degree of the cylindrical battery cell 1 with respect to a lattice shape of the grid G1 of the surface portion 10 after tubing, as a reference shape.

Tubing may be defined as a process of covering an outer surface of a can of a cylindrical battery cell with an insulating shell, i.e., the surface portion 10 in one or more embodiments, to form an outer circumferential surface structure of the can.

According to one or more embodiments, before the surface portion 10 of the cylindrical battery cell 1 is mounted, the grid G1 may be printed on the surface portion 10, and then the surface portion 10 having the grid G1 printed thereon may be mounted on the cylindrical battery cell 1.

However, a lattice spacing of the grid G1 after tubing may differ from that before tubing due to thermal contraction of the surface portion 10 during tubing. Thus, according to one or more embodiments, by measuring the swelling degree of the cylindrical battery cell 1 with respect to the lattice shape of the grid G1 after tubing as a reference shape, the precision of swelling measurement may be improved. In this case, an image of a shape of the grid G1 of the cylindrical battery cell 1 for which tubing has been completed may be secured, and the secured image may be defined as a reference grid shape. Thus, in case of occurrence of swelling in a battery cell, by comparing a grid shape image of a cylindrical battery cell for which tubing has been completed with a grid shape image of a battery cell in which swelling occurs, a deformation degree of the grid may be identified and a swelling position and a swelling degree of the cylindrical battery cell may be identified from a deformation degree of the grid.

In the method of manufacturing a battery cell according to one or more embodiments, the same method may also be applied to the grid G1' formed on a top surface portion of the cylindrical battery cell 1.

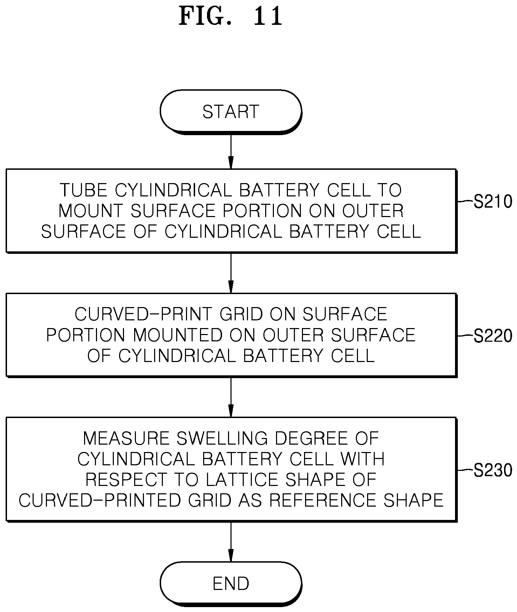

FIG. 11 is a flowchart showing a method of manufacturing a battery cell, according to one or more embodiments of the disclosure. Features and components not shown in FIG. 11 may be the same or similar to corresponding features and components shown in FIGS. 1 to 4.

Referring to FIG. 11, a method of manufacturing a battery cell according to one or more embodiments of the disclosure may include an operation S210 of tubing the cylindrical battery cell 1 to mount the surface portion 10 on an outer surface of the cylindrical battery cell 1, an operation S220 of curved-printing the grid G1 on the surface portion 10 formed in a cylindrical shape, and an operation S230 of measuring a swelling degree of the cylindrical battery cell 1 with respect to the lattice shape of the curved-printed grid G1.

According to one or more embodiments, the surface portion 10 of the cylindrical battery cell 1 may be first tubed, and then the grid G1 may be curved-printed on the tubed surface portion 10 of the cylindrical battery cell 1.

According to one or more embodiments, the swelling degree of the cylindrical battery cell 1 may be measured with respect to the grid G1 formed on the tubed surface portion 10 of the cylindrical battery cell 1.

In the method of manufacturing a battery cell according to one or more embodiments, the same method may also be applied to the grid G1' formed on a top surface portion of the cylindrical battery cell 1.

As such, the disclosure has been described with reference to the embodiments shown in the drawings, but these are merely provided as examples. It is to be understood by those of ordinary skill in the art that various modifications and other equivalent embodiments are possible from the embodiments. Therefore, the technical scope of the disclosure should be defined by the claims.

Specific technical details described in the embodiments are provided as examples, and do not limit the technical scope of the embodiments. In order to briefly and clearly describe the description of the disclosure, the description of conventional general techniques and configurations may be omitted.

Connections of lines or connection members between components shown in the drawings are illustrative of functional connections and/or physical or circuit connections and, in practice, may be expressed as alternative or additional various functional connections, physical connections, or circuit connections. If there is no specific mentioning, such as "essential" or "important," it may not be a necessary component for the application of the disclosure.

A designator "the" or similar designators described in the description and the claims may refer to both singular and plural, unless otherwise specifically limited. If the range is described in the embodiments, the range includes the disclosure to which an individual value falling within the range is applied (unless stated otherwise), and is the same as the description of an individual value constituting the range in the description of the disclosure.

If there is no apparent description of the order of operations constituting the method according to the embodiments or a contrary description thereof, the operations may be performed in an appropriate order.

The disclosure is not necessarily limited according to the describing order of the operations. The use of all examples or example terms (for example, etc.) in the disclosure are provided to describe the disclosure in further detail, and the range of the disclosure is not necessarily limited by the examples or the example terms unless limited by the claims.

It is to be understood by those of ordinary skill in the art that various modifications, combinations, and changes may be made according to design conditions and factors within the scope of the appended claims or equivalents thereof.

The battery cell and the method of manufacturing the battery cell according to embodiments of the disclosure may measure a swelling degree of the battery cell from a deformation degree of the grid, thereby precisely measure a swelling degree of the battery cell, uniformly or substantially uniformly measuring a swelling degree of each cell, and thus improving the precision of swelling measurement for battery cells.

Moreover, the battery cell and the method of manufacturing the battery cell according to embodiments of the disclosure may identify whether the plurality of battery cells to be accommodated in the battery pack have an error, before they are mounted on the battery pack, contributing to improvement in the reliability of the battery pack.

However, aspects and effects of the present disclosure are not limited to the aspects and effects mentioned above, and other aspects and effects not mentioned will be understood by those of ordinary skill in the art from the detailed description and description of the claims.

It is to be understood that embodiments described herein are to be considered in a descriptive sense and not for purposes of limitation. Descriptions of features or aspects within each embodiment should typically be considered as available for other similar features or aspects in other embodiments. While one or more embodiments have been described with reference to the figures, it is to be understood by those of ordinary skill in the art that various changes in form and details may be made therein without departing from the scope of the disclosure as set forth by the following claims.

## Claims

1. A battery cell comprising a grid on a surface portion of the battery cell.

2. The battery cell as claimed in claim 1, wherein a ratio of a line length to an inter-line spacing length in the grid is an integer.

3. The battery cell as claimed in claim 1 or claim 2, wherein an inter-line intersecting portion of the grid is formed as a space portion.

4. The battery cell as claimed in any one of claims 1 to 3, wherein a lattice spacing of the grid is adjustable.

5. The battery cell as claimed in any one of claims 1 to 4, wherein the grid comprises thermochromic ink.

6. The battery cell as claimed in any one of claims 1 to 4, wherein the grid is printed as a hologram.

7. The battery cell as claimed in any one of claims 1 to 6, wherein the battery cell has a cylindrical shape.

8. The battery cell as claimed in any one of claims 1 to 6, wherein the battery cell has a prismatic shape.

9. The battery cell as claimed in any one of claims 1 to 6, wherein the battery cell is a pouch-type battery cell.

10. A method of manufacturing a battery cell, the method comprising:
printing a grid on a surface portion of a battery cell;
tubing the surface portion on which the grid is printed to mount the surface portion on an outer surface of the battery cell; and
measuring a swelling degree of the battery cell with respect to a grid lattice shape of the surface portion after tubing, as a reference shape.

11. The method as claimed in claim 10, wherein the battery cell has a cylindrical shape.

12. A method of manufacturing a battery cell, the method comprising:
tubing a battery cell to mount a surface portion thereof on an outer surface of the battery cell;
curved-printing a grid on the surface portion mounted on the battery cell; and
measuring a swelling degree of the battery cell with respect to a lattice shape of the curved-printed grid, as a reference shape.

13. The method as claimed in claim 12, wherein the battery cell has a cylindrical shape.
